# EUROPÄISCHE PATENTSCHRIFT

(11) **EP 3 374 760 B1**
(45) Veröffentlichungstag und Bekanntmachung des Hinweises auf die Patenterteilung: **15.05.2024**
(21) Anmeldenummer: 16793809.1
(22) Anmeldetag: 03.11.2016
(51) Int. Cl.: G01N 21/88, G01N 21/89

(54) **VORRICHTUNG UND VERFAHREN ZUR ÜBERWACHUNG EINER LAUFENDEN WARENBAHN**
DEVICE AND METHOD FOR MONITORING A RUNNING MATERIAL WEB
DISPOSITIF ET PROCÉDÉ POUR CONTRÔLER UNE BANDE DE MATÉRIAU EN MOUVEMENT

(30) Priorität: 11.11.2015 DE 102015119444
(43) Veröffentlichungstag der Anmeldung: 19.09.2018
(73) Patentinhaber: PROTECHNA Herbst GmbH & Co. KG, 85579 Neubiberg (DE)
(72) Erfinder: KLEINDORP, Markus, 72297 Seewald (DE); BETHKE, Thomas, 85521 Ottobrunn (DE); GRAF, Norbert, 85457 Wörth (DE); VARGA, Gabor, 82008 Unterhaching (DE)
(74) Vertreter: Paul & Albrecht Patentanwälte PartG mbB
(86) Internationale Anmeldenummer: PCT/EP2016/076539
(87) Internationale Veröffentlichungsnummer: WO 2017/080904

(56) Entgegenhaltungen:
- EP-A1- 2 816 793
- WO-A1-2007/096475
- DE-A1-102009 050 073
- JP-A- H0 755 443
- US-A- 5 696 591
- US-A- 5 870 204

## Beschreibung

Die Erfindung betrifft eine Vorrichtung und ein Verfahren zur Überwachung einer laufenden Warenbahn, insbesondere auf Fehler, gemäß den Oberbegriffen der unabhängigen Ansprüche.

In der EP 1 654 532 sind eine Vorrichtung und ein Verfahren zum Erfassen von Fehlerstellen während der Herstellung von Tufting-Ware beschrieben. Die Vorrichtung weist eine Lichtquelle zum Einstrahlen von Licht auf die Tufting-Ware und eine optische Erfassungseinrichtung zum Erfassen des von der Tufting-Ware ausgehenden Lichts. Die optische Erfassungseinrichtung erfasst Intensitäten des von der Rückseite der Tufting-Ware innerhalb des Bestrahlungsbereichs reflektierten Lichts und ermittelt anhand der erfassten Lichtintensitäten durch Fehlerstellen bedingte Unebenheiten der Rückseite der Tufting-Ware. Die Lichtquelle ist eine Vielzahl von Infrarot-Leuchtdioden. Das von der Lichtquelle ausgehende Licht schließt mit der Rückseite der Tufting-Ware einen spitzen Winkel ein. Die Erfassungseinrichtung umfasst eine Zeilenkamera und Filter zur Unterdrückung von regulären Helligkeitssignalen sowie zum Erkennen von Fehlerstellen durch Fadenbruch oder Doppelfaden. Die Lichtquelle und die Erfassungseinrichtung sind auf einen Arbeitstakt der Tuftingmaschine synchronisiert. Es werden mehrere Erfassungszyklen durchlaufen und zeitlich auftretende Einschränkungen des Sichtfeldes zeitlich ausgeblendet. Es sind drei Zeilenkameras vorgesehen, die die gesamte Breite der Tufting-Ware überwachen.

Gegenstand der DE 101 23 870 ist eine Vorrichtung zur automatischen Überwachung von Flächengebilden auf Produktionsmaschinen mittels einer elektrooptischen Abtasteinrichtung, die an eine Auswerteeinrichtung angeschlossen ist. Die Abtasteinrichtung umfasst mehrere, zeilenförmige Sensorelemente quer zur Transportrichtung, die das Flächengebilde in Spuren zerlegen, die sich teilweise überlappen. Als Sensorelemente sind Kontaktbildsensorelemente vorgesehen. Der Vorschub des Flächengebildes wird als Basis für die Aufnahme von Bildzeilen des Flächengebildes verwendet.

Aus der DE 101 17 698 ist ein Sensorsystem zur Inspektion von bewegtem Textilfasergut bekannt, bei dem in etwa 90° zur Transportrichtung des Textilguts mindestens 3 Sensorleisten versetzt oder gestaffelt angebracht sind. Die Sensorleisten sind aus mehreren CMOS oder CCD Elementen gefertigt, wobei jedes dieser Elemente mindestens 20 Pixel aufweist. Die Sensorleisten sind mit einem gemeinsamen Auswertesystem verbunden. Sie inspizieren das Textilgut durch eine gemeinsame Glasscheibe.

Bei einem in der EP 2 103 927 beschriebenen Verfahren zur automatischen Überwachung textiler Verstärkungsmaterialien wird eine über die gesamte Breite des Verstärkungsmaterials reichende optische Abbildung des zu überwachenden Verstärkungsmaterials erzeugt. Anschließend wird die Abbildung in einem Computer zur Erkennung von Materialeigenschaften analysiert. Das Verstärkungsmaterial wird an einem stationären Zeilenscanner vorbeigeführt. Der Zeilenscanner umfasst eine Lichtquelle und einen Licht-Sensor.

Aus der DE 36 39 636 C2 sind ein Verfahren zur automatischen Inspektion von Textilien und flächenhaften Waren und eine Schaltungsanordnung bekannt, wobei die Warenoberfläche mit einer Anordnung gleichartiger Farb-Flächenkameras jeweils ausschnittsweise erfasst wird. Die Signale der drei Primärfarben werden digitalisiert und ausgewertet. Bei bewegten Waren wird die Ware stroboskopisch beleuchtet.

Ein gattungsgemäßes Verfahren und eine Vorrichtung zur Erfassung von longitudinalen Fehlern in einer laufenden Warenbahn ist in der US 5,696,591 A beschrieben. Durch mehrere Kameras mit jeweils einer Steuereinheit, die quer zu einer Transportrichtung der Warenbahn positioniert sind, werden Bilddaten von angrenzenden Spalten der Oberfläche der Warenbahn aufgenommen. Die durch die Kameras aufgenommenen Rohdaten der Warenbahn werden mit Hilfe der Steuereinheiten gesammelt, digitalisiert und zu Bilddaten bearbeitet. Es werden Mittelwerte für ein Profil der Lichtintensität über die Breite der Warenbahn gebildet und eine Auswerteeinheit übermittelt, in der aus den Profilen longitudinale Fehler erfasst werden. Die Auswerteeinheit ist ein über serielle Kommunikationsleitungen mit den Kameras verbundener Hauptrechner. Die Warenbahn wird durch eine Lichtquelle, die z.B. IR-Licht emittiert, beleuchtet. Jede Kamera ist eine CCD Kamera mit einem CCD-Flächenelement, z. B. mit 2048 Elementen quer zur Transportrichtung und mit 96 Elementen in Transportrichtung. Die Rate, mit der die Bilddaten gesammelt werden, ist nicht mit einer vorbestimmten Geschwindigkeit der Warenbahn synchronisiert.

Die Anordnung mehrerer vollständiger Kameras nebeneinander zur Überwachung einer laufenden Warenbahn über ihre gesamte Breite ist aufwendig und mit den verhältnismäßig hohen Kosten für die Kameras verbunden.

Gegenstand der US 8,058,602 B2 ist eine längliche Industriekamera mit einer Kameraanordnung und einer im Abstand dazu angeordneten separaten Linsenanordnung in einem Gehäuse. Die Kameraanordnung weist eine aus mehreren Abschnitten zusammengesetzte Platine auf, wobei jeder Abschnitt mehrere aneinandergereihte Linear-Sensoren, z. B. lineare CMOS-Sensoren, umfasst. Die Industriekamera ist dazu ausgebildet, ein Bild der Warenbahn im Maßstab von etwa 1:1 aufzunehmen. Über die Übermittlung und Auswertung der Bilddaten gibt es keine weiteren Informationen.

In der DE 10 2009 050 073 A1 ist eine Bildsensoranordnung zur Erfassung von Bildinformationen mit einer Vielzahl gleichartiger Sensorzellen, die zumindest in einer Reihe angeordnet sind, beschrieben.

Jede Sensorzelle umfasst einen Bildsensor, z. B. einen CMOS-Sensor, mit einer eigenen Sensoroptik, und eine Auswerteeinheit mit einem Bildspeicher. Die Auswerteeinheiten sind über einen oder mehrere bitserielle Datenkanäle miteinander verbunden.

Eine der Sensorzellen weist einen Controller auf, über den die Auswerteeinheiten mit einem externen Rechner verbindbar sind.

Die JP H07 55443 A beschreibt eine Einrichtung zur Druckfehlerprüfung, die gedruckte Seiten mit Manuskriptseiten vergleicht. Die Einrichtung umfasst CCD-Zeilenkameras. Die parallel anfallenden Daten der Kameras werden seriell über ein optisches Kabel übertragen und parallel an eine Prozessoreinheit übermittelt.

In der US 5,870,204 A wird eine Vorrichtung zur Steuerung der Beleuchtung einer sich mit variabler Geschwindigkeit bewegenden Warenbahn beschrieben.

Die WO 2007/096475 A1 beschreibt eine Methode zur Überwachung einer sich schnell bewegenden Papierbahn. Durch Kameras werden Bilder an mehreren aufeinander folgenden Positionen desselben Punktes in Querrichtung aufgenommen und analysiert.

Aufgabe der Erfindung ist es, eine Vorrichtung und ein Verfahren zur Überwachung einer laufenden Warenbahn, insbesondere auf Fehler, zu entwickeln, die eine kostengünstige, sichere Überwachung über die gesamte Breite ermöglichen.

Die Aufgabe ist durch die unabhängigen Ansprüche gelöst.

Eine erfindungsgemäße Überwachungsvorrichtung zur Überwachung einer laufenden Warenbahn, insbesondere auf Fehler, anhand ausgewerteter Bilddaten der Warenbahn ist mit mindestens zwei Kameraelementen versehen, wobei die Kameraelemente senkrecht zur Transportrichtung der Warenbahn nebeneinander positionierbar sind. Die Vorrichtung umfasst eine Steuer- und Auswerteeinheit sowie mindestens eine serielle Kommunikationsverbindung, die die Kameraelemente und die Steuer- und Auswerteeinheit verbindet. Jedes Kameraelement weist ein Flächenkameraelement zur Aufnahme von Rohdaten auf.

Im Folgenden werden die durch ein Flächenkameraelement aufgenommenen Bilddaten als Rohdaten bezeichnet. Bei einem Kameraelement, das Schwarz-Weiß-Bilder liefert, umfassen die Rohdaten die Helligkeitswerte der einzelnen Flächenelemente des Flächenkameraelementes, auch Pixel genannt.

Bei einem Kameraelement, das farbige Bilder liefert, umfassen die Rohdaten die Helligkeitswerte der einzelnen Flächenelemente, aus denen außerhalb des Flächenkameraelementes Farbwerte ermittelt werden.

In einer Alternative umfassen die Rohdaten bei einem Kameraelement, das farbige Bilder liefert, die im Flächenkameraelement ermittelten Farbwerte der einzelnen Flächenelemente.

Die Überwachungsvorrichtung weist mindestens ein Kameramodul auf. Jedes Kameramodul umfasst mindestens eine Kameragruppe mit mindestens zwei Kameraelementen. Jedes Kameramodul ist mit einem Gehäuse versehen. Die Kameraelemente einer Kameragruppe sind an eine serielle Kommunikationsverbindung angeschlossen. In jeder Kameragruppe sind die Kameraelemente dazu ausgebildet, die von den Flächenkameraelementen aufgenommenen Rohdaten über die serielle Kommunikationsverbindung zu der Steuer- und Auswerteeinheit weiterzuleiten. Die Steuer- und Auswerteeinheit ist dazu ausgebildet, für alle Kameragruppen aus den Rohdaten der Kameraelemente Bilddaten zu erzeugen und diese auszuwerten.

Kameraelemente, die lediglich die Rohdaten eines Bildes der Warenbahn aufnehmen, die an die Steuer- und Auswerteeinheit weitergeleitet werden, können einfach und kostengünstig aufgebaut sein. Sie benötigen neben dem Flächenkameraelement wenig zusätzliche Bauteile. Insbesondere minimiert die Zusammenfassung von Kameraelementen zu Kameragruppen und die Übertragung der Rohdaten durch jeweils eine gemeinsame serielle Kommunikationsverbindung den Verkabelungsaufwand durch eine Bus-förmige Anordnung.

Die Übertragung der Rohdaten, die von den Flächenkameraelementen der Kameraelemente einer Kameragruppe aufgenommen werden, erfolgt mit Hilfe der entsprechend ausgebildeten Kameraelemente nur über eine serielle Kommunikationsverbindung und nicht jeweils über eine Verbindung pro Kameraelement. Dies erspart mechanischen und elektronischen Aufwand bei der Installation und beim Betrieb einer erfindungsgemäßen Vorrichtung.

Serielle Kommunikationsverbindungen ermöglichen leistungsstarke Kommunikationsverbindungen und damit eine schnelle und präzise Auswertung der Rohdaten. Dies ermöglicht ein sicheres und schnelles Abschalten, z. B. einer die Warenbahn herstellenden oder bearbeitenden Textilmaschine, wie eine Wirkmaschine, bei Fehlern in der Warenbahn.

In einer Ausführungsform enthält eine Kameragruppe bis zu 8 Kameraelemente. Eine Adressierung von 8 Kameraelementen erfolgt z. B. über einen 3-stelligen Binärcode eines entsprechenden Schalters. In einem Beispiel ist ein solcher Schalter auch von Hand zu bedienen.

In einer Alternative erfolgt die Adressierung der Kameraelemente automatisch, wobei jedes Kameraelement zum nächsten Kameraelement weiterschaltet.

Mindestens eines der Kameraelemente einer Kameragruppe weist zwei Datenverbindungen und einen Multiplexer auf. Bei jedem dieser Kameraelemente ist jeweils eine Datenverbindung als eine Kameradatenverbindung ausgebildet, die zu dem Flächenkameraelement des Kameraelementes geführt ist. Die andere Datenverbindung des Kameraelementes ist als eine Durchgangsdatenverbindung ausgebildet, die durch das Kameraelement geführt ist, und die an ein weiteres Kameraelement der Kameragruppe anschließbar ist. Die beiden Datenverbindungen des Kameraelementes sind mit Hilfe des Multiplexers nacheinander an die serielle Kommunikationsverbindung anschließbar.

Von den Kameraelementen einer Kameragruppe sind alle ggf. bis auf ein letztes Kameraelement mit den zwei Datenverbindungen und dem Multiplexer versehen. Eine der Datenverbindungen ist über den Multiplexer an die serielle Kommunikationsleitung anschließbar. Die Anordnung zweier Datenverbindungen in einem Kameraelement ermöglicht es, ohne zusätzliche Leitungen mehrere Kameraelemente an eine serielle Kommunikationsverbindung anzuschließen.

In einer Ausführungsform ist der Multiplexer über die serielle Kommunikationsleitung von der Steuer- und Auswerteeinheit ansteuerbar.

In einer Ausführungsform umfasst ein Kameramodul mindestens zwei Kameragruppen mit jeweils einer seriellen Kommunikationsverbindung der Kameraelemente untereinander und zur Steuer- und Auswerteeinheit. Die Steuer- und Auswerteeinheit ist zur parallelen Bearbeitung der Rohdaten der Kameragruppen ausgebildet.

Bei einer parallelen Bearbeitung der Rohdaten verschiedener Kameragruppen durch geeignete Prozessoren in der Steuer- und Auswerteeinheit erhöht sich die Geschwindigkeit der Bildbearbeitung. Sie verdoppelt sich etwas, wenn z. B. zwei Kameragruppen angeschlossen sind.

In einer Ausführungsform umfasst die Steuer- und Auswerteeinheit einen Prozessor mit mindestens zwei Kernen und einem Speichermodul mit einem gemeinsamen Speicherbereich. Vorteilhafterweise benutzen alle Kerne des Prozessors den gemeinsamen Speicherbereich.

In einer Ausführungsform sind die Kameraelemente der Kameragruppen abwechselnd in dem Gehäuse nebeneinander positioniert.

Ein Vorteil einer abwechselnden Anordnung von Kameraelementen verschiedener Gruppen ist, dass die Anzahl der Kameraelemente je Kameragruppe ähnlich groß ist. Dies gilt auch, wenn sich die abwechselnde Anordnung in im Folgenden erwähnten Erweiterungsmodulen fortsetzt. Dadurch sind die Zeiten zur Übertragung von Rohdaten in den Gruppen ähnlich lang.

Das Gehäuse eines Kameramoduls umschließt die nebeneinander angeordneten Kameraelemente. Die Außenkontur des Gehäuses ist z. B. im Wesentlichen zylindrisch. In einer Ausführungsform ist der Außenumfang rund. In Alternativen ist der Außenumfang rechteckig, quadratisch oder vieleckig.

In einer Ausführungsform umfasst das Gehäuse ein Gehäuseprofil. In einem Beispiel umfasst das Gehäuse ein Gehäuseprofil, dessen Außenkontur die Form eines an einer Seite offenen Zylindermantels hat, und mindestens einen abnehmbaren Deckel, der die offene Seite des Gehäuseprofils verschließt. Abnehmbare Deckel ermöglichen eine gute Zugänglichkeit von im Profil angeordneten Elementen, z. B. der Kameraelemente.

In einer Ausführungsform sind das Gehäuseprofil und/oder die Deckel des Gehäuses als Abschnitte von Strangpressprofilen ausgebildet. Die Strangpressprofile sind in einem Beispiel aus Aluminium hergestellt.

Ein als Hauptkameramodul (Masterkameramodul) ausgebildetes Kameramodul umfasst die Steuer- und Auswerteeinheit.

In einer Ausführungsform ist die Steuer- und Auswerteeinheit an einem Deckel des Gehäuses angeordnet.

In einer Ausführungsform sind mindestens zwei Kameramodule vorgesehen, wobei die Gehäuse der Kameramodule miteinander verbunden sind.

Die Gehäuse der beiden Kameramodule weisen Abschnitte des gleichen Gehäuseprofils auf. Dabei stoßen Querschnittsflächen der Gehäuseprofile bei Verbindung der Kameramodule aneinander. In einer Ausführungsform ist ein Verbindungselement vorgesehen, das sich in einer Öffnung des Profils beider Gehäuse über beide Kameramodule erstreckt. Das Verbindungselement stabilisiert die Verbindung der Gehäuse.

Weitere Kameramodule neben dem Hauptkameramodul der Überwachungsvorrichtung werden als Erweiterungskameramodule bezeichnet.

In einer Ausführungsform umfasst die Überwachungsvorrichtung ein Hauptkameramodul und ein Erweiterungskameramodul, in dem weitere Kameraelemente einer oder mehrerer Kameragruppen angeordnet sind.

In einer Ausführungsform weist das Flächenkameraelement einen Flächensensor und ein Optikelement auf.

In einem Beispiel ist der Brennpunkt (Fokus) des Optikelementes einstellbar.

In einer Ausführungsform ist der Flächensensor als ein CMOS-Flächensensor ausgebildet. Ein CMOS-Flächensensor ermöglicht eine hohe Aufnahmegeschwindigkeit bei geringem Stromverbrauch. In einer alternativen Ausführungsform ist der Flächensensor als ein CCD-Flächensensor ausgebildet.

In einer Ausführungsform sind die Flächenkameraelemente jeweils in einem Kameraabstand zueinander angeordnet, wobei der Kameraabstand 0,3 bis 2,0 m beträgt. Vorzugsweise beträgt der Kameraabstand 0,5 m bis 0,8 m.

Der Kameraabstand wird unter Berücksichtigung des Abstandes der Überwachungsvorrichtung zur Warenbahn und der Brennweite des Objektelementes gewählt. Je kleiner die Brennweite eines Objektivelementes ist, desto größer kann der Kameraabstand gewählt werden. Eine kleinere Brennweite führt allerdings bei gegebenem Abstand zur Warenbahn zu einer geringeren optischen Qualität.

Die Länge des Gehäuses eines Kameramoduls beträgt in etwa ein ganzzahliges Vielfaches des Kameraabstandes. Vorzugsweise sind die Kameramodule mit 2 bis 8 Kameraelementen versehen.

Das Gehäuse eines Kameramoduls weist für jedes Kameraelement einen Gehäuseabschnitt auf.

In einer Ausführungsform ist im Innern eines Gehäuseabschnitts ein Platinenelement vorgesehen, auf dem das Kameraelement angeordnet ist.

In einer Alternative erstrecken sich die Platinenelemente jeweils über den gesamten Gehäuseabschnitt. Die Platinenelemente sind z. B. über Board-to-Board-Steckverbinder miteinander verbunden.

In einer weiteren Alternative weist die serielle Kommunikationsverbindung Kabel und Stecker auf, durch die die Kameraelemente miteinander verbunden sind. Die Steckverbindung ist zum Beispiel als RJ45-Steckverbindung ausgebildet.

In einer Ausführungsform ist die Überwachungsvorrichtung mit einer Beleuchtungsvorrichtung für die Warenbahn versehen. Die Beleuchtungseinrichtung weist für jedes Kameraelement mindestens ein Beleuchtungselement mit mindestens zwei LEDs (Licht emittierende Dioden) auf. Das Beleuchtungselement ist so ausgebildet, dass sich die LEDs auf einer Verbindungslinie zwischen den Flächenkameraelementen befinden.

In einer alternativen Ausführungsform sind die LEDs auf einer Linie parallel zur Verbindungslinie der Flächenkameraelemente angeordnet.

In einer Ausführungsform sind die LEDs als leistungsstarke LEDs ausgebildet, die zum Beispiel eine Leistung von mindestens 1 Watt, vorzugsweise von 2 Watt haben. Bei der Verwendung von leistungs- und damit lichtstarken LEDs kann die Anzahl der benötigten LEDs pro Kameraelement gering sein. Dies vereinfacht ihre Anordnung, z. B. auf der Verbindungslinie zwischen den Kameraelementen.

In einer Ausführungsform sind die LEDs als Infrarot-LEDs ausgebildet und Tageslicht-Sperrfilter vor den Flächenkameras vorgesehen. Dies ermöglicht, den Einfluss von Schattenwurf und Helligkeitsänderungen des sichtbaren Umgebungslichtes zu verhindern.

In einer Ausführungsform ist vor jeder LED ein Optikteil, zum Beispiel eine Linse, angeordnet. In einer Alternative umfasst das Beleuchtungselement mindestens eine LED und ein Optikteil in einem gemeinsamen Gehäuse.

Die erfindungsgemäßen Verfahren sind auf den beschriebenen, erfindungsgemäßen Vorrichtungen durchführbar. Die Verfahren weisen die Vorteile und Merkmale der Vorrichtungen entsprechend auf.

Bei einem erfindungsgemäßen Verfahren zur Überwachung einer laufenden Warenbahn, insbesondere auf Fehler, wird die Warenbahn in eine Transportrichtung transportiert. Es werden Bilddaten der Warenbahn ausgewertet. Die Bilddaten werden mit Hilfe von mindestens zwei Kameraelementen, die senkrecht zur Transportrichtung der Warenbahn nebeneinander positioniert sind, einer Steuer- und Auswerteeinheit und mindestens einer seriellen Kommunikationsverbindung, die mindestens ein Kameraelement mit der Steuer- und Auswerteeinheit verbindet, erzeugt und ausgewertet. Rohdaten der Bilddaten werden jeweils durch ein Flächenkameraelement eines Kameraelementes aufgenommen.

Die Rohdaten der Bilddaten eines Bildes der Warenbahn werden durch mindestens ein Kameramodul, das mindestens eine Kameragruppe mit mindestens zwei Kameraelementen umfasst, aufgenommen. Die Kameraelemente einer Kameragruppe sind an eine serielle Kommunikationsverbindung angeschlossen. In jeder Kameragruppe werden die aufgenommenen Rohdaten von den Kameraelementen über die serielle Kommunikationsverbindung zu der Steuer- und Auswerteeinheit geleitet. In der Steuer- und Auswerteeinheit werden aus den Rohdaten Bilddaten erzeugt und die Bilddaten der Kameraelemente der Kameragruppen ausgewertet.

In einer Ausführungsform werden in jedem Kameraelement die von einem Flächenkameraelement aufgenommenen Rohdaten durch einen Serializer seriell in die serielle Kommunikationsverbindung gespeist. Die seriellen Rohdaten werden in der Steuer- und Auswerteeinheit durch einen Deserializer parallelisiert und ausgewertet. Eine serielle Datenübertragung stellt die sichere Übertragung der großen Menge an Rohdaten sicher. Ein Übersprechen zwischen Datenleitungen und Probleme durch Laufzeitunterschiede werden vermieden.

In einer Ausführungsform werden die Rohdaten von den Flächenkameraelementen der Kameraelemente der Kameragruppe über mindestens ein Kameraelement einer Kameragruppe geleitet. Umfasst die Kameragruppe z. B. zwei Kameraelemente, so werden durch ein Kameraelement abwechselnd die eigenen Rohdaten und die Rohdaten z. B. des zweiten Kameraelementes zu der seriellen Kommunikationsverbindung geleitet. Zur Weiterleitung von eigenen und fremden Rohdaten ist ein Kameraelement mit zwei Datenverbindungen und mit einem Multiplexer versehen.

Dabei werden über eine als Kameradatenverbindung ausgebildete Datenverbindung Rohdaten von dem Flächenkameraelement des Kameraelementes, d. h. eigene Rohdaten, und über eine als Durchgangsdatenverbindung ausgebildete Datenverbindung Rohdaten eines Flächenelementes mindestens eines weiteren Kameraelementes, d. h. fremde Rohdaten, zu der seriellen Kommunikationsverbindung geleitet. Mit Hilfe des Multiplexers werden die beiden Datenverbindungen des Kameraelementes nacheinander an die serielle Kommunikationsverbindung angeschlossen.

In einer Ausführungsform werden die Rohdaten der Kameraelemente von mindestens zwei Kameragruppen in der Steuer- und Auswerteeinheit parallel bearbeitet.

In einer Ausführungsform werden durch die Auswerte- und Steuereinheit aus den Rohdaten bearbeitete Daten ermittelt. Dazu werden die Rohdaten zumindest mehrerer Zeilen aufsummiert und Mittelwerte gebildet. In einer Ausführungsform werden die bearbeiteten Daten durch die Steuer- und Auswerteeinheit, z. B. auf Fehler, ausgewertet und ggf. ein Alarmsignal erzeugt.

Die Erfindung wird anhand von in der Zeichnung schematisch dargestellter Beispiele weiter erläutert. Es zeigen:
Figur 1 eine seitliche Seitenansicht einer schematischen Anordnung einer Wirkmaschine mit einer erfindungsgemäßen Überwachungsvorrichtung;
Figur 2 eine schematische Vorderansicht der Wirkmaschine mit der Überwachungsvorrichtung;
Figur 3 eine schematische Funktionsskizze der Überwachungsvorrichtung eines ersten Beispiels;
Figur 4 ein vereinfachtes Blockschaltbild von Kameraelementen der Überwachungsvorrichtung;
Figur 5 ein vereinfachtes Blockschaltbild der Überwachungsvorrichtung;
Figur 6 ein vereinfachtes Blockschaltbild einer Steuer- und Auswerteeinheit der Überwachungsvorrichtung;
Figur 7 ein vereinfachtes Blockschaltbild eines Kameraelement der Überwachungsvorrichtung;
Figur 8 ein vereinfachtes Blockschaltbild eines Beleuchtungselementes der Überwachungsvorrichtung;
Figur 9 Diagramme zur Bildauswertung der Überwachungsvorrichtung;
Figur 10 ein Ablaufdiagramm zur Übertragung der Rohdaten zur Steuer- und Auswerteeinheit;
Figur 11 eine Überwachungsvorrichtung eines zweiten Beispiels anhand einer sehr vereinfachten Explosionszeichnung; und
Figur 12 einen vereinfachten Querschnitt durch die Überwachungsvorrichtung der Figur 11.

### Erstes Beispiel:

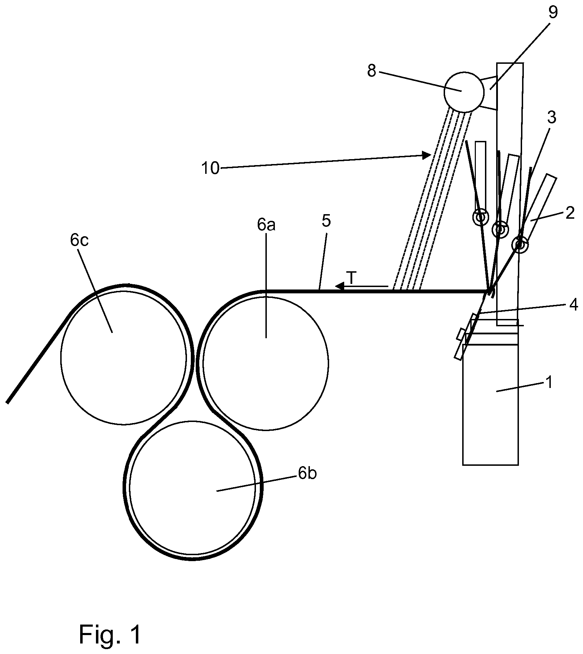

**Figur 1** zeigt schematisch eine Wirkmaschine mit einem Maschinengestell 1 mit Wirkwerkzeugen, z. B. eine Kettenwirkmaschine mit Legeschienen 2 für Kettfäden 3 und mit Schiebernadeln 4, von denen nur eine dargestellt ist. Die an den Wirkwerkzeugen erzeugte Warenbahn 5 wird über Walzen 6a, 6b, 6c, z. B. zu einer nicht dargestellten Aufwickeleinrichtung, geführt.

Eine erfindungsgemäße Überwachungsvorrichtung 8 des ersten Beispiels zur Überwachung der laufenden Warenbahn 5 ist oberhalb der Warenbahn 5 angeordnet. Der Querschnitt der Vorrichtung 8 ist in Figur 1 durch einen Kreis angedeutet. Die Überwachungsvorrichtung 8 erstreckt sich quer zur Warenbahn. Die Vorrichtung 8 ist durch eine Befestigungsvorrichtung 9 an dem Maschinengestell 1 befestigt. Sie ist in Transportrichtung T hinter den Wirkwerkzeugen und vor den Umlenkwalzen 6a, 6b, 6c angeordnet. Die Vorrichtung 8 weist eine Beleuchtungseinrichtung auf, deren Lichtstrahlen 10 auf die Warenbahn 5 gerichtet sind.

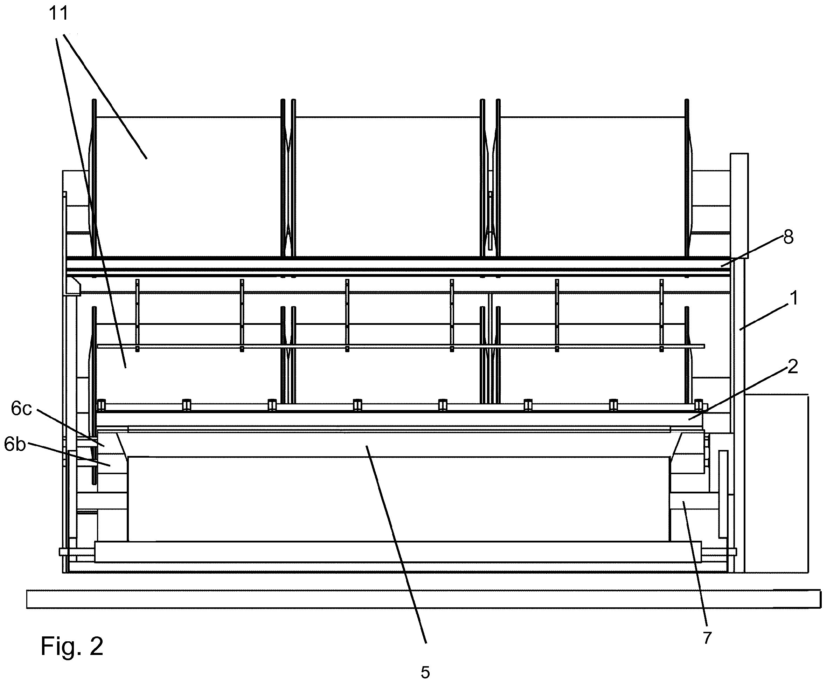

**Figur 2** zeigt eine Vorderansicht der Wirkmaschine mit der Vorrichtung 8. Das Maschinengestell 1 umfasst einen Rahmen, in dem in diesem Beispiel sechs Teilkettbäume 11, die Überwachungsvorrichtung 8, Legeschienen 2 für die Nadelbarren (mit Schiebernadeln) 4 sowie die Walzen 6b, 6c und eine Aufwickelwalze 7 gelagert sind. Die Warenbahn 5 ist in Figur 2 beim Verlassen der Walze 6b und als aufgerollte Fertigware auf der Aufwickelwalze 7 zu sehen.

Die Überwachungsvorrichtung 8 erstreckt sich z.B. parallel zu Achsen der Walzen 6, 7, d. h. quer zur Warenbahn 5, an beiden Seiten bis zu dem Rahmen des Maschinengestells 1.

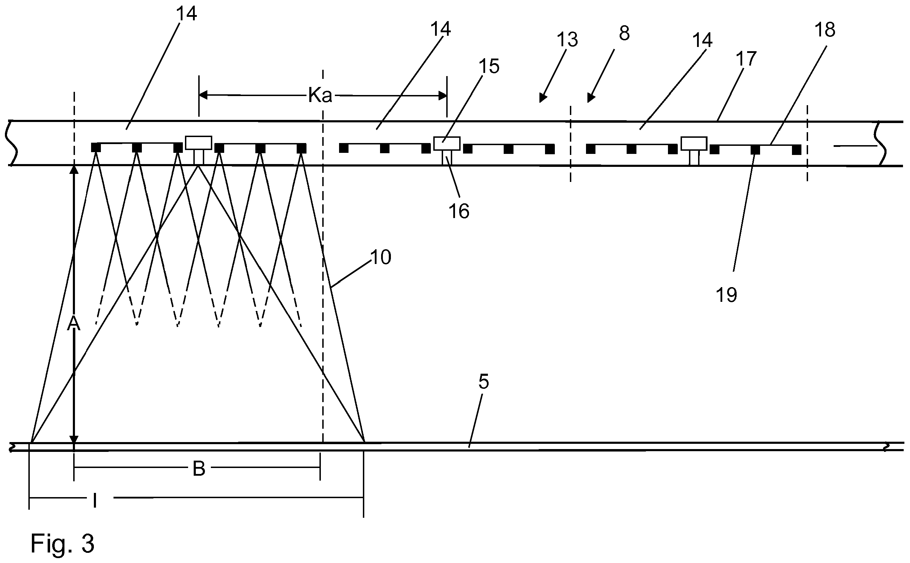

**Figur 3** zeigt eine schematische Funktionsskizze der Überwachungsvorrichtung 8. Die Überwachungsvorrichtung 8 umfasst, in diesem Beispiel, ein Kameramodul 13 mit Kameraelementen 14, von denen drei in Figur 3 zu sehen sind. Die Kameraelemente 14 weisen jeweils ein Flächenkameraelement 15 mit einem Flächensensor 15 a und mit einem Optikelement 16 auf.

Das Kameramodul 13 ist mit einem Gehäuse 17 versehen.

Die Kameraelemente 14 sind durch die Anordnung der Vorrichtung 8 senkrecht zur Transportrichtung T der Warenbahn 5, d. h. quer zur Warenbahn 5, nebeneinander positioniert. Dabei sind die Flächenkameraelemente 15 in dem Gehäuse 17 mit einem Kameraabstand Ka zueinander und jeweils in der Mitte eines sich quer zur Warenbahn 5 erstreckenden Kameraelementes 14 angeordnet.

Die Vorrichtung 8 ist in einem Abstand A zur Warenbahn 5 angeordnet. Der Abstand A beträgt 0,2 m bis 2,0 m, insbesondere von 0,6 bis 1,1 m, von der Warenbahn 5.

Die Überwachungsbreite I, d. h. die Breite eines zu überwachenden Abschnitts der Warenbahn 5, eines Flächenkameraelementes 15 ist von dem Abstand A und vom Kameraabstand Ka zwischen den Flächenkameraelementen 15 abhängig.

Der Kameraabstand Ka der Flächenkameraelemente 15 beträgt 0,3 m bis 2,0 m, vorzugsweise 0,5 m bis 0,8 m. In diesem Beispiel sind die Flächenkameraelemente 15 in einem Kameraabstand Ka von ca. 0,6 m nebeneinander angeordnet.

Figur 3 zeigt den Kameraabstand Ka zwischen zwei Flächenkameraelementen 15, eine entsprechende Breite B eines Abschnitts der Warenbahn 5, der einem Kameraelement 14 zugeordnet ist sowie die Überwachungsbreite I. Die Überwachungsbreite I ist größer als die einem Kameraelement 14 zugeordnete Breite B. D. h. die durch zwei nebeneinander angeordneten Flächenkameraelemente 15 überwachten Überwachungsbereiche I überlappen sich etwas.

Das Optikelement 16 umfasst ein Objektiv, das beispielsweise als ein S-Mount-Objektiv ausgebildet ist. In diesem Beispiel ist das Objektiv in seiner Entfernung zum Flächensensor 15a verschiebbar und damit der Brennpunkt (Fokus) des Optikelementes verstellbar. Die Brennweite beträgt 3 mm bis 16 mm, vorzugsweise 6 mm bis 8 mm.

In einer Alternative weist das Objektiv mindestens eine Linse auf, deren Linsenkrümmung veränderbar ist. Linsen mit veränderbarer Linsenkrümmung und damit mit veränderbarer Brennweite sind Flüssiglinsen.

Die Brennweite des Objektivs wird in Abhängigkeit vom Abstand A zur Warenbahn bei einem gewünschten Kameraabstand A und einer gewünschten Überwachungsbreite I gewählt.

Jedem Kameraelementes 14 ist ein Gehäuseabschnitt des durchgehenden Gehäuses 17 zugeordnet, wobei der Übergang von einem Gehäuseabschnitt zum nächsten in Figur 3 durch eine gestrichelte Linie gezeigt ist. Die Breite eines Gehäuseabschnittes des Gehäuses 17 der Kameraelemente 14 entspricht der Breite B und beträgt ebenfalls 0,6 m.

Die Kameraelemente 14 weisen zum Beispiel jeweils ein in der Zeichnung nicht dargestelltes Platinenelement mit dem Flächenkameraelement 15 auf. Das Optikelement 16 ist ebenfalls an dem Platinenelement befestigt.

Das Gehäuse 17 des Kameramoduls 13 weist lichtdurchlässige Bereiche vor den Flächenkameraelementen 15 sowie vor den LEDs 19 auf.

Das Gehäuse 17 umfasst einen Abschnitt eines Gehäuseprofils und mindestens einen Deckel. Das Gehäuseprofil und die Deckel sind aus Strangpressprofilen aus Aluminium hergestellt. Das Gehäuseprofil, und damit das Gehäuse 17, ist mit einer zumindest teilweise zylindrischen Mantelfläche versehen. Der Durchmesser der Gehäuse 17 beträgt 7 cm bis 18 cm, vorzugsweise 10 cm bis 15 cm. In diesem Beispiel beträgt der Durchmesser in etwa 11 cm, z. B. 11,2 cm.

In diesem Beispiel ist die Vorrichtung 8 zur Überwachung der Warenbahn mit einer Beleuchtungseinrichtung versehen. Die Beleuchtungseinrichtung weist für jedes Kameraelement 14 ein Beleuchtungselement 18 mit einer Halterung und mit z.B. 6 LEDs 19 (Licht emittierenden Dioden) auf. Die LEDs 19 sind auf einer Verbindungslinie zwischen den Flächenkameraelementen 15 bzw. ihrer Verlängerung an äußeren Flächenkameraelementen 15 angeordnet. Den in Figur 3 gezeigten Kameraelementen 14 sind jeweils 6 LEDs 19, drei auf jeder Seite des Flächenkameraelementes 15, zugeordnet. Die Lichtstrahlen 10 der 6 LEDs 19 leuchten die zu überwachende Breite I aus.

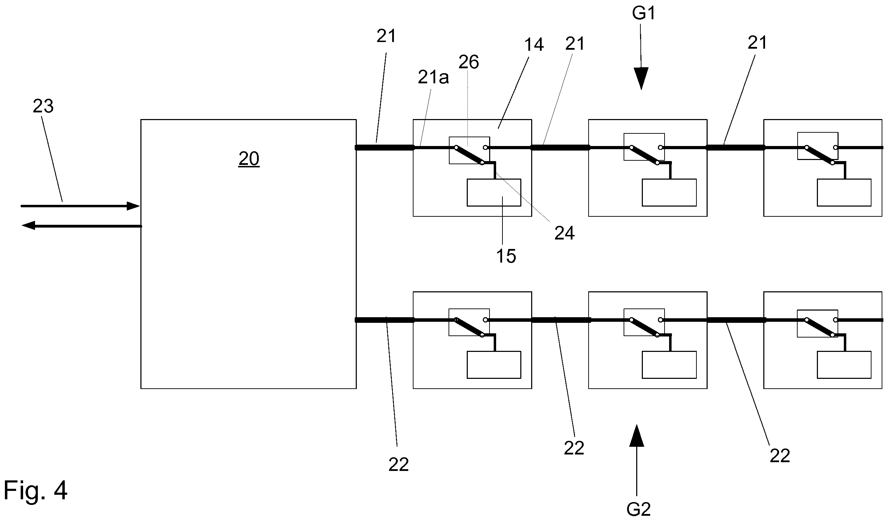

**Figur 4** zeigt ein vereinfachtes Blockschaltbild von Kameraelementen 14 der Überwachungsvorrichtung 8. Die Überwachungseinrichtung 8 dieses Beispiels umfasst das oben erwähnte Kameramodul 13, das zwei Kameragruppen G1 und G2 mit jeweils drei Kameraelementen 14 aufweist. D. h. das Kameramodul 13 ist mit sechs Kameraelementen 14 versehen, die in zwei Kameragruppen G1, G2 aufgeteilt sind.

Die Überwachungsvorrichtung 8 ist mit eine Steuer- und Auswerteeinheit 20 und für jede Kameragruppe G1, G2 mit einer seriellen Kommunikationsverbindung 21, 22 versehen. Die Kommunikationsverbindungen 21, 22 verbinden jeweils die Kameraelemente 14 der Kameragruppen G1, G2 untereinander und mit der Steuer- und Auswerteeinheit 20. Die Steuer- und Auswerteeinheit 20 ist zur parallelen Bearbeitung der durch die Flächenkameraelemente 15 aufgenommenen Rohdaten ausgebildet.

Die seriellen Kommunikationsverbindungen 21, 22 weisen BUS-Leitungen für die Übertragung von Daten, Taktsignal- und Steuersignalen auf. In diesem Beispiel sind die Datenverbindungen als LVDS-Leitungen ausgebildet. Die Steuerverbindungen sind als IC2-Bus-Leitungen ausgebildet. In einer weiteren Alternative sind die Steuerverbindungen als CAN-Bus-Leitungen ausgebildet.

In diesem Beispiel mit einem Kameramodul 13 umfasst dieses die Steuer- und Auswerteeinheit 20 sowie die seriellen Kommunikationsverbindungen 21, 22. Das Kameramodul (13) ist daher als Hauptkameramodul ausgebildet.

Die Kameraelemente 14 jeder Kameragruppe G1, G2 sind dazu ausgebildet, die durch die Flächenkameraelemente 15 aufgenommenen Rohdaten über die jeweilige serielle Kommunikationsverbindung 21, 22 zu der Steuer- und Auswerteeinheit 20 zu leiten. Die Steuer- und Auswerteeinheit 20 ist dazu ausgebildet, aus den Rohdaten Bilddaten zu erzeugen und diese auszuwerten. Sie ist über eine Kommunikationsleitung 23 an eine Maschinensteuerung der Wirkmaschine anschließbar.

Mindestens zwei Kameraelemente 14 jeder Kameragruppe G1, G2 mit drei Kameraelementen 14 sind mit zwei Datenverbindungen und einem Multiplexer 26 versehen. Eine der Datenverbindungen ist als eine Kameradatenverbindung 24 ausgebildet, die zu dem Flächenkameraelement 15 des Kameraelementes 14 geführt ist. Die zweite Datenverbindung ist als eine Durchgangsdatenverbindung, ein Abschnitt einer Datenverbindung 21a der seriellen Kommunikationsverbindung 21 ausgebildet, die durch das Kameraelement 14 geführt ist. Die beiden Datenverbindungen des Kameraelementes 14 sind mit Hilfe des Multiplexer 26 nacheinander an die jeweilige serielle Kommunikationsverbindung 21, 22 anschließbar.

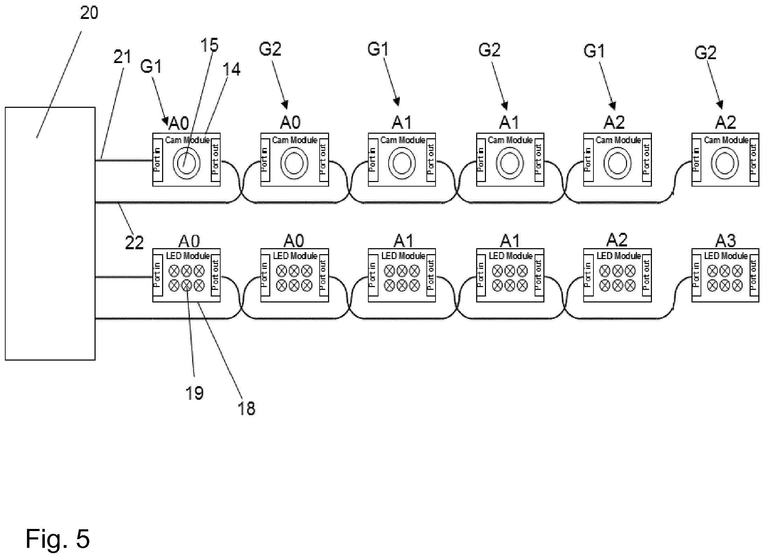

**Figur 5** zeigt ein vereinfachtes Blockschaltbild der Überwachungsvorrichtung 8. Wie in Figur 5 angedeutet, sind die Kameraelemente 14 der beiden Gruppen G1 und G2 abwechselnd nebeneinander positioniert. Die serielle Kommunikationsverbindung 21 der ersten Gruppe G1 verbindet, von links nach rechts gesehen, das erste, dritte und fünfte Kameraelement 14 miteinander und mit der Steuer- und Auswerteeinheit 20. Die serielle Kommunikationsverbindung 22 der zweiten Gruppe G2 verbindet entsprechend das zweite, vierte und sechste Kameraelement 14 miteinander und mit der Steuer- und Auswerteeinheit 20.

Die Überwachungsvorrichtung 8 ist mit Verbindungen 27, 28 zur Ansteuerung der Beleuchtungselemente 18 der Beleuchtungseinrichtung versehen. Die Verbindung 27 verbindet die Beleuchtungselemente 18, die den Kameraelementen 14 der ersten Kameragruppe G1 zugeordnet sind untereinander und mit der Steuer- und Auswerteeinheit 20. Entsprechendes gilt für die Verbindung 28.

Die Verbindungen 27, 28 weisen Bus-Leitungen für Steuersignale auf.

In diesem Beispiel weisen die Verbindungen 27, 28 I2C-Bus-Leitungen auf. In einer Alternative weisen die Verbindungen 27, 28 CAN-Bus-Leitungen auf.

Die Steuer- und Auswerteeinheit 20 ist dazu ausgebildet, die LEDs 19 der Steuerelemente 18 durch Steuersignale einzeln oder in Gruppen ein- und auszuschalten.

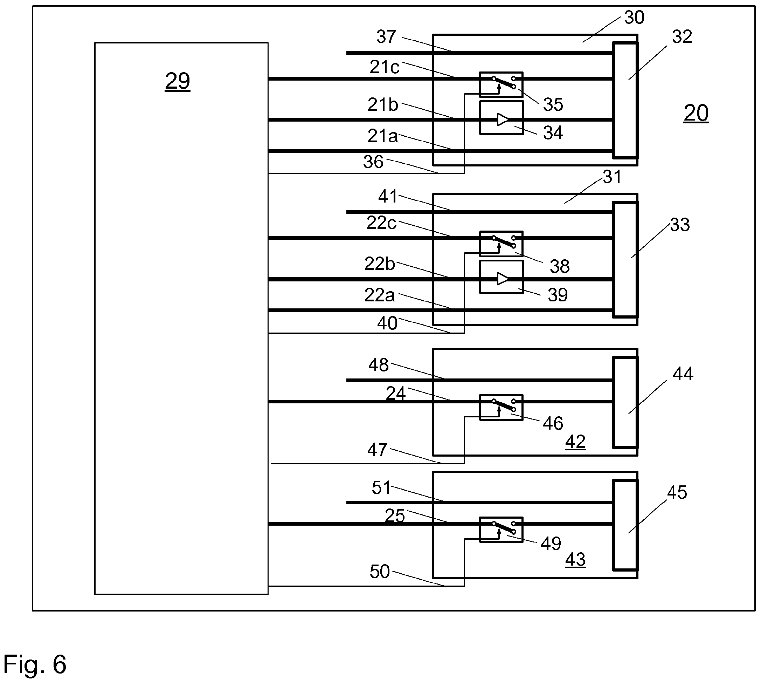

**Figur 6** zeigt ein vereinfachtes Blockschaltbild einer Steuer- und Auswerteeinheit 20 der Überwachungsvorrichtung 8. Die Steuer- und Auswerteeinheit 20 weist zumindest einen Mikro-Prozessor 29 (CPU) und jeweils ein Steuerelement 30, 31 mit einem Ausgang 32, 33 für jede der Kameragruppen G1, G2 auf.

Das Steuerelement 30 für die erste Kameragruppe G1 umfasst Abschnitte der Kommunikationsverbindung 21 mit Abschnitten z.B. einer Datenverbindung 21a zur Übertragung der Rohdaten, einer Taktverbindung 21b zur Taktung der Übertragung und einer Steuerverbindung 21c zur Steuerung der Übertragung. Das Steuerelement 30 umfasst einen ersten Repeater 34, d. h. einen Signalverstärker und -aufbereiter zur Erhöhung der Reichweite, der in die Taktverbindung 21b geschaltet ist, und einen abschaltbaren zweiten Repeater 35, der in die Steuerverbindung 21c geschaltet ist. Der zweite Repeater 35 ist über eine Steuerleitung 36 von dem Mikro-Prozessor 29 aktivierbar. Das Steuerelement 30 umfasst Abschnitte einer Stromzufuhrverbindung 37.

Die Stromzufuhrverbindung 37 sowie die Steuerverbindung 21c, die Taktverbindung 21b und die Datenverbindung 21a sind an den Ausgang 32 angeschlossen. Die Kameraelemente 14 der ersten Kameragruppe G1 sind über diesen Ausgang 32 mit der Steuer- und Auswerteeinheit 20 verbindbar.

Das Steuerelement 31 für die zweite Kameragruppe G2, ist entsprechend aufgebaut. Das Steuerelement 31 für die zweite Kameragruppe G2 umfasst Abschnitte der Kommunikationsverbindung 22 mit Abschnitten z. B. einer Datenverbindung 22a zur Übertragung der Rohdaten, einer Taktverbindung 22b zur Taktung der Übertragung und einer Steuerverbindung 21c zur Steuerung der Übertragung. Das Steuerelement 31 umfasst einen ersten Repeater 38, der in die Taktverbindung 22b geschaltet ist und einen zweiten abschaltbaren Repeater 39, der in die Steuerverbindung 22c geschaltet ist. Der zweite Repeater 39 ist über eine Steuerleitung 40 von dem Mikro-Prozessor 29 aktivierbar. Das Steuerelement 31 umfasst Abschnitte einer Stromzufuhrverbindung 41.

Die Stromzufuhrverbindung 41 sowie die Steuerverbindung 21c, die Taktverbindung 21b und die Datenverbindung 21a sind an den Ausgang 33 angeschlossen. Die Kameraelemente 14 der zweiten Kameragruppe G2 sind über diesen Ausgang 33 mit der Steuer- und Auswerteeinheit 20 verbindbar.

Die Steuer- und Auswerteeinheit 20 umfasst jeweils ein Versorgungselement 42, 43 mit einem Ausgang 44, 45 für die Beleuchtungselemente 18 jeder der Kameragruppen G1, G2.

Das Versorgungselement 42 für die erste Kameragruppe G1 umfasst Abschnitte der Kommunikationsleitung 24 zu den Beleuchtungselementen 18. Die Kommunikationsleitung 24 ist als eine Steuerverbindung ausgebildet. Das Versorgungselement 42 umfasst einen abschaltbaren Repeater 46, der in die Kommunikationsleitung 24 geschaltet ist. Der abschaltbare Repeater 46 ist über eine Steuerleitung 47 von dem Mikro-Prozessor 29 aktivierbar. Das Versorgungselement 42 umfasst Abschnitte einer Stromzufuhrverbindung 48.

Die Stromzufuhrverbindung 48 sowie die Kommunikationsleitung 24 sind an den Ausgang 44 angeschlossen. Die Beleuchtungselemente 18 der ersten Kameragruppe G1 sind über diesen Ausgang 44 mit der Steuer- und Auswerteeinheit 20 verbindbar.

Das Versorgungselement 43 für die zweite Kameragruppe G2, ist entsprechend aufgebaut. Das Versorgungselement 43 umfasst Abschnitte der Kommunikationsleitung 25 zu den Beleuchtungselementen 18. Die Kommunikationsleitung 25 ist als eine Steuerverbindung ausgebildet. Das Versorgungselement 43 umfasst einen abschaltbaren Repeater 49, der in die Kommunikationsleitung 25 geschaltet ist. Der abschaltbare Repeater 49 ist über eine Leitung 50 von dem Mikro-Prozessor 29 aktivierbar. Das Versorgungselement 43 umfasst Abschnitte einer Stromzufuhrverbindung 51.

Die Stromzufuhrverbindung 51 sowie die Kommunikationsleitung 25 sind an den Ausgang 45 angeschlossen. Die Beleuchtungselemente 18 der zweiten Kameragruppe G2 sind über diesen Ausgang 45 mit der Steuer- und Auswerteeinheit 20 verbindbar.

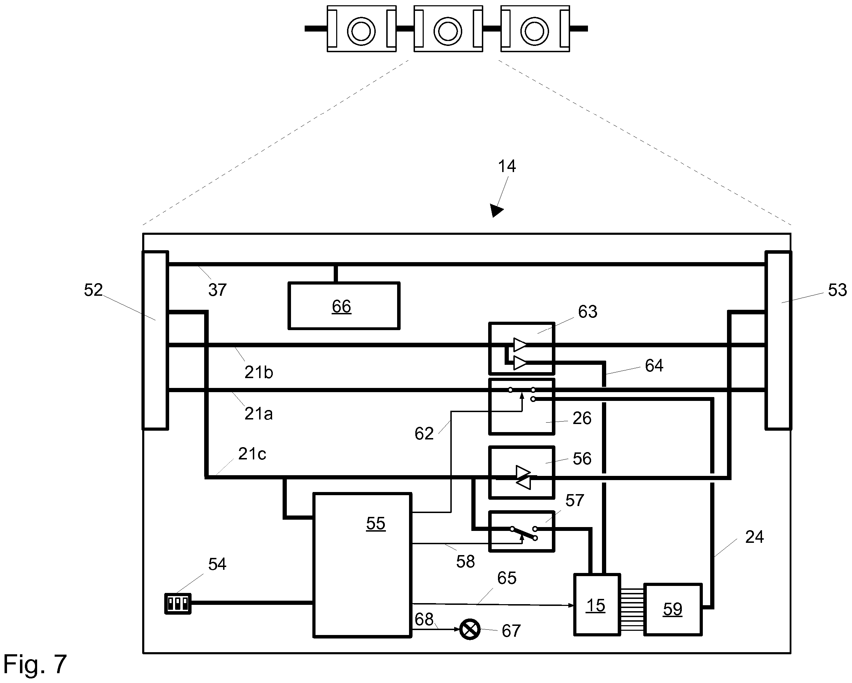

**Figur 7** zeigt ein vereinfachtes Blockschaltbild eines Kameraelementes 14 der Überwachungsvorrichtung 8. Das in Figur 7 gezeigte Kameraelement 14 ist z. B. das erste Kameraelement 14 der ersten Kameragruppe G1 mit dem Flächenkameraelement 15, das als ein CMOS-Flächensensor ausgebildet ist.

Das Kameraelement 14 ist mit einem Eingang 52 und mit einem Ausgang 53 für das nachfolgende Kameraelement 14, z. B. das zweite Kameraelement 14 der ersten Kameragruppe G1 versehen. Es umfasst Abschnitte der Stromzufuhrverbindung 37 und der seriellen Kommunikationsverbindung 21, nämlich der Datenverbindung 21a, der Taktverbindung 21b und der Steuerverbindung 21c, die jeweils mit dem Eingang 52 und dem Ausgang 53 verbunden sind.

Das Kameraelement 14 umfasst einen Adressierschalter 54, einen IO-Expander 55, einen Repeater 56 und einen aktivierbaren Repeater 57. Der IO-Expander 55 ist an die Steuerverbindung 21c angeschlossen und mit dem Adressierschalter 54 verbunden. Die Steuerverbindung 21c ist durch den aktivierbaren Repeater 57 mit dem Flächenkameraelement 15 verbindbar. Der aktivierbare Repeater 57 ist über eine Leitung 58 von dem IO-Expander 55 schaltbar. Der Repeater 56 ist in die Steuerverbindung 21c geschaltet.

Der Abschnitt der Datenverbindung 21a bildet die Durchgangsdatenverbindung des Kameraelements 14.

Das Kameraelement 14 umfasst einen Serializer 59, an den Ausgänge des Flächenkameraelementes 15 angeschlossen sind. Es umfasst den oben erwähnten Multiplexer 26, der in die Datenverbindung 21a geschaltet ist. Der Serializer 59 ist über die Kameradatenverbindung 24 mit dem Multiplexer 26 verbunden. Der Multiplexer 26 ist über eine Leitung 62 oder mehrere Leitungen von dem IO-Expander 55 schaltbar.

Das Kameraelement 14 umfasst einen Repeater 63, der in die Taktverbindung 21b geschaltet ist. Das Flächenkameraelement 15 ist über eine Leitung 64 an den Repeater 63 und damit an die Taktverbindung 21b angeschlossen. Das Flächenkameraelement 15 ist über eine Leitung 65 oder über mehrere Leitungen von dem EO-Expander 55 steuerbar.

Das Kameraelement 14 umfasst eine Spannungsregeleinheit 66, die in die Stromzufuhrverbindung 37 geschaltet ist.

Das Kameraelement 14 umfasst eine oder mehrere Positionsleuchtelemente, in diesem Beispiel rote LEDs 67, die über eine Leitung 68 von dem IO-Expander 55 einschaltbar sind. Sie zeigen die Position des erkannten Warenfehlers an.

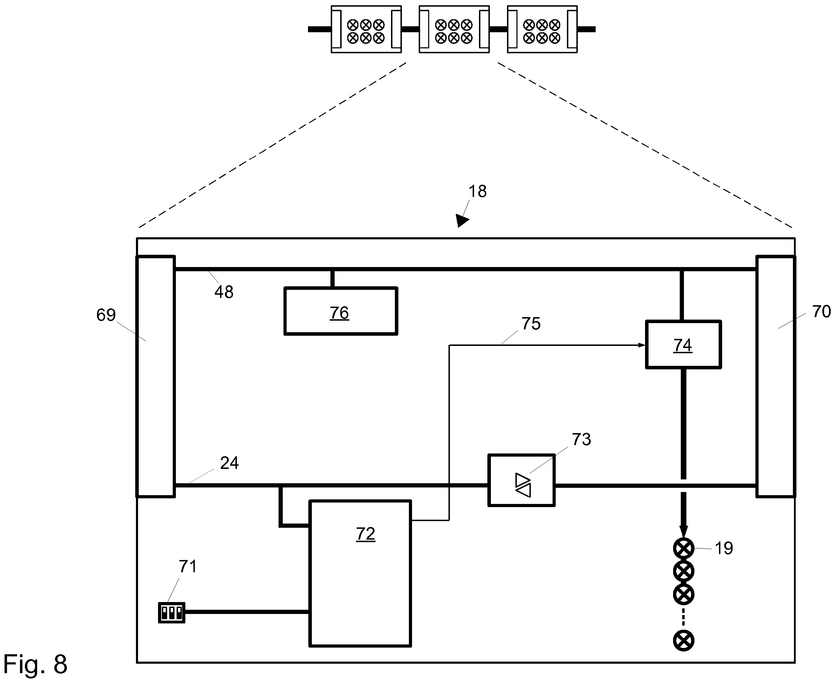

**Figur 8** zeigt ein vereinfachtes Blockschaltbild eines Beleuchtungselementes 18 der Überwachungsvorrichtung.

Das Beleuchtungselement 18 ist dem oben beschriebenen Kameraelement 14 zugeordnet. Es ist mit einem Eingang 69 und einem Ausgang 70 versehen. Es umfasst Abschnitte der Stromzufuhrverbindung 48 und der Kommunikationsleitung 24, die jeweils mit dem Eingang 69 und dem Ausgang 70 verbunden sind.

Das Beleuchtungselement 18 umfasst einen Adressierschalter 71, einen IO-Expander 67 und einen Repeater 73. Der IO-Expander 72 ist an die Kommunikationsleitung 24 angeschlossen und mit dem Adressierschalter 71 verbunden. Der Repeater 73 ist in die Kommunikationsleitung 24 geschaltet.

Das Beleuchtungselement 18 umfasst einen Treiber 74 für die LEDs 19, der zwischen die Stromzufuhrverbindung 48 und die LEDs 19 geschaltet ist. Der Treiber 74 ist über eine Leitung 75 von dem IO-Expander 72 steuerbar.

Das Beleuchtungselement 18 umfasst eine Spannungsregeleinheit 76, die in die Stromzufuhrverbindung 48 geschaltet ist.

In einer Alternative sind die oben beschriebenen Positionselemente von dem IO-Expander 72 des Beleuchtungselementes 16 ansteuerbar. Sie sind in diesem Fall mit dem IO-Expander 72 und nicht mit dem IO-Expander 55 verbunden.

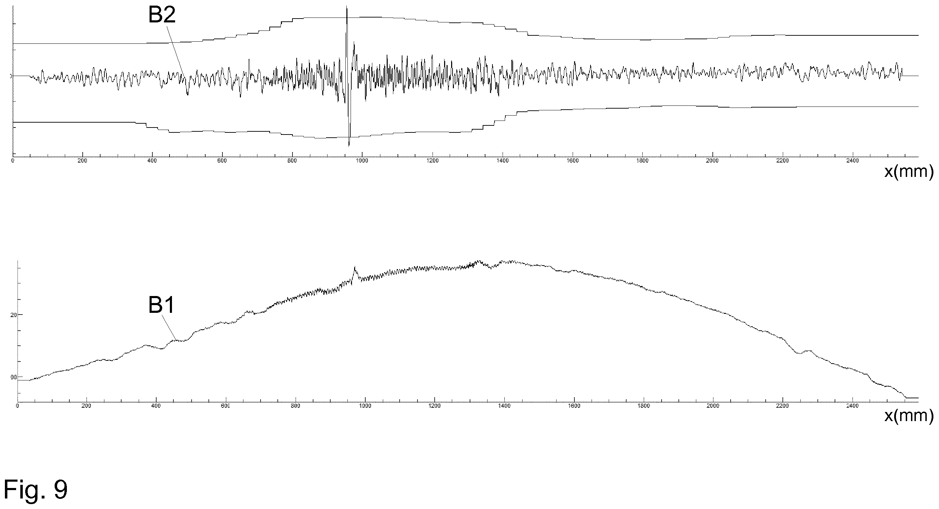

**Figur 9** zeigt Diagramme zur Bildauswertung durch die Steuer- und Auswerteeinheit 20 der Überwachungsvorrichtung.

Es werden Rohdaten BI aller Bildabschnitte über eine Breite X (in Millimetern) eines schmalen beleuchteten Streifens der Warenbahn 5 aufgenommen. Aus den Rohdaten BI jedes Bildabschnitts werden Daten B1 (Bilddaten) eines Helligkeitsprofils über die Breite X der Warenbahn 5 abgeleitet. Dazu werden die Rohdaten BI des Bildabschnitts zu Blöcken zusammengefasst und Mittelwerte gebildet. Ein Block umfasst einige Pixel quer zur Transportrichtung und einige Pixel in Transportrichtung, beispielsweise jeweils 3. Sein Mittelwert ist ein Wert der Daten B1 des Helligkeitsprofils des unteren Diagramms der Figur 9.

Bei der Auswertung durch die Steuer- und Auswerteeinheit 20 werden die Daten B1 des Helligkeitsprofils zu Daten B2 normiert und gefiltert (ausgewertete Bilddaten). Durch die Normierung werden Intensitätsverluste des Helligkeitsprofils im Randbereich der Warenbahn aufgrund der Linsenwölbung des Optikelementes 16 ausgeglichen.

Die normierten und gefilterten Daten B2 des Helligkeitsprofils sind in dem oberen Diagramm der Figur 9 zu sehen. Sowohl das Diagramm mit den Daten B1 als auch das Diagramm mit den Daten B2 zeigt einen Effekt durch eine hellere, fehlerhafte Stelle zwischen 950 und 1000 mm.

In einer Alternative ist eine erfindungsgemäße Vorrichtung 8 zur Überwachung der laufenden Warenbahn 5 unterhalb der Warenbahn 5 angeordnet.

In einer Alternative umfasst die Überwachungsvorrichtung mindestens zwei Kameramodule. Dabei sind die Gehäuse 17 der Kameramodule miteinander verbunden.

In einer Alternative umfasst eine Überwachungsvorrichtung das oben beschriebene Kameramodul 13, das die Steuer- und Auswerteeinheit 20 umfasst, sowie ein weiteres Kameramodul mit zwei Kameragruppen mit jeweils zwei Kameraelementen. Das Kameramodul 13 wird auch als Hauptkameramodul (Masterkameramodul) bezeichnet. Weitere Kameramodule werden als Erweiterungsmodule bezeichnet.

Das oder die Erweiterungsmodule umfassen die gleiche Anzahl an Kameragruppen wie das Hauptkameramodul.

**Im Betrieb** wird die laufende Warenbahn 5, die in Transportrichtung T transportiert wird, durch die Überwachungsvorrichtung 8, insbesondere auf Fehler, überwacht. Dazu werden Bilddaten der Warenbahn 5 ausgewertet. Die Bilddaten werden in diesem Beispiel mit Hilfe von mehreren senkrecht zur Transportvorrichtung der Warenbahn 5 nebeneinander positionierten Kameraelementen 14, der Steuer- und Auswerteeinheit 20 und den Kommunikationsverbindungen 25, die die Kameraelemente 14 und die Steuer- und Auswerteeinheit 20 verbinden, erzeugt und ausgewertet. Die Rohdaten der Bilddaten werden durch die Flächenkameraelemente 15 der jeweiligen Kameraelemente 14 aufgenommen.

Die Aufnahme der Rohdaten erfolgt durch das Kameramodul 13, das die Kameragruppen G1, G2 und das Gehäuse 17 umfasst. Die durch die Flächenkameraelemente 15 aufgenommenen Rohdaten werden durch die Kameraelemente 14 der jeweiligen Kameragruppe G1, G2, die an die entsprechende serielle Kommunikationsverbindung 21, 22 angeschlossen sind, über die serielle Kommunikationsverbindung 21, 22 zu der Steuer- und Auswerteeinheit 20 weitergeleitet. Aus den Rohdaten werden durch die Steuer- und Auswerteeinheit 20 Bilddaten erzeugt. Die Bilddaten der Kameraelemente 14 der Kameragruppen G1, G2 werden durch die Steuer- und Auswerteeinheit 20 ausgewertet.

Die Rohdaten von den Flächenkameraelementen 15 der Kameraelemente 14 einer der Kameragruppen G1, G2 werden jeweils über die Kameraelemente 14 der Kameragruppe G1 oder G2 zu der entsprechenden seriellen Kommunikationsverbindung 21, 22 geleitet.

Wie erwähnt, sind die Kameraelemente 14 dazu jeweils mit zwei Datenverbindungen, und zwar der als Kameradatenverbindung 24 ausgebildeten und der als Durchgangsdatenverbindung ausgebildeten Datenverbindung, d. h. dem Abschnitt der Datenverbindung 21a, und mit dem Multiplexer 26 versehen.

Die Rohdaten von dem Flächenkameraelement 15 des betrachteten Kameraelementes 14 werden über die Kameradatenverbindung 24 und die Rohdaten der Flächenkameraelemente 15 weiterer Kameraelemente 14 der Kameragruppe G1, G2 über die Durchgangsdatenverbindung, d. h. über den Abschnitt der Datenverbindung 21a, zu der seriellen Kommunikationsverbindung 21, 22 geleitet. Mit Hilfe des Multiplexers 26 werden die beiden Datenverbindungen des Kameraelementes 14 nacheinander an die jeweilige serielle Kommunikationsverbindung 21, 22 angeschlossen.

Die Rohdaten der Kameraelemente 14 der beiden Kameragruppen G1, G2 werden in der Steuer- und Auswerteeinheit 20 parallel bearbeitet.

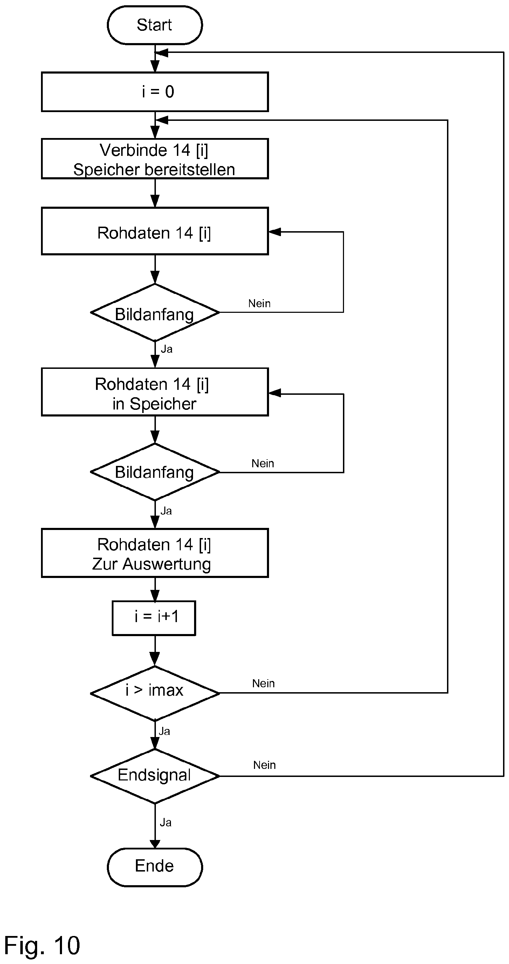

**Figur 10** zeigt ein schematisches Ablaufdiagramm zur Übertragung der Rohdaten von den Kameraelementen 14 einer Kameragruppe G1, G2 zu der Steuer- und Auswerteeinheit 20 durch die Steuer- und Auswerteeinheit 20.

Dabei wird für jede Kameragruppe G1, G2 zunächst das erste Kameraelement 14[0], dem innerhalb seiner Gruppe der Index i=0 zugeordnet ist, mit der Steuer- und Auswerteeinheit 20 verbunden. Nach der Verbindung wird ein Bereich eines Speichers der Steuer- und Auswerteeinheit 20 bereitgestellt. Die Rohdaten des Kameraelementes 14[0] werden übertragen und in den Speicher geschrieben, sobald ein Bildanfang erkannt wurde. Beim nächsten Erkennen eines Bildanfangs werden die Rohdaten des Kameraelementes 14[0] aus dem Speicher zur Auswertung weitergeleitet. Der Index i wird um 1 erhöht und das dem Index entsprechende nächste Kameraelement 14[i] der Kameragruppe G1, G2 mit der Steuer- und Auswerteeinheit 20 verbunden. Das Verfahren wird für die weiteren Kameraelemente 14[i] wiederholt, bis die Rohdaten des letzten Kameraelementes (bei 3 Kameraelementen 14 je Kameragruppe G1, G2 das dritte) eingelesen und weitergeleitet sind. Dann wird der Index wieder auf 0 gesetzt und damit wieder das erste Kameraelement 14[0] der Kameragruppe G1, G2 mit der Steuer- und Auswerteeinheit 20 verbunden.

Solange die Warenbahn überwacht wird, z.B. solange die die Warenbahn herstellende Wirkmaschine (vgl. Fig.1) in Betrieb ist, wiederholt sich die Datenübertragung. Sie endet nach einem Endsignal.

### Zweites Beispiel:

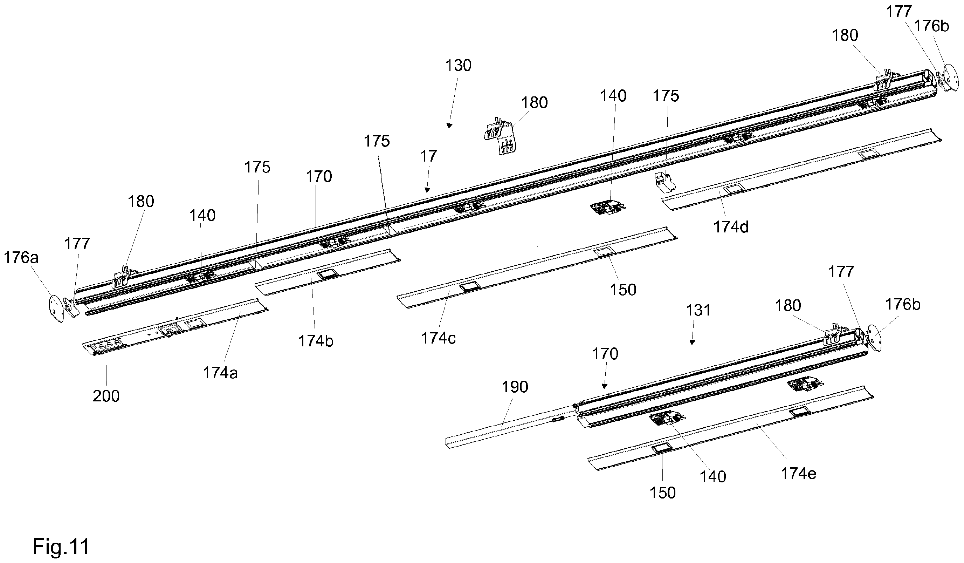

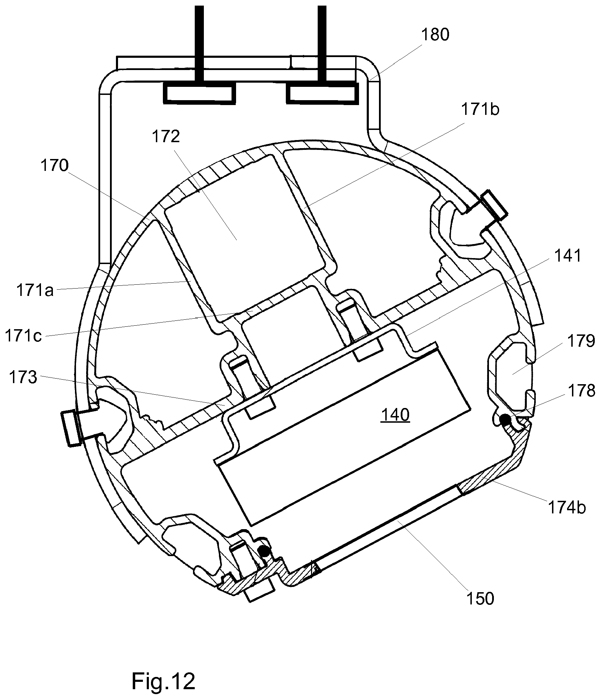

Das zweite Beispiel entspricht dem ersten Beispiel bis auf die im Folgenden beschriebenen Merkmale. Die Überwachungsvorrichtung des zweiten Beispiels ist in den **Figuren 11** **und** **12** dargestellt. Sie umfasst zwei Kameramodule, ein Hauptkameramodul 130 und ein Erweiterungskameramodul 131.

Das Hauptkameramodul 130 umfasst eine Steuer- und Auswerteeinheit 200 sowie sechs Kameraelemente 140, jeweils drei in einer Kameragruppe G1, G2. Das erste, dritte und fünfte Kameraelement gehört zur ersten Kameragruppe G1 und die anderen Kameraelemente 140 zur zweiten Kameragruppe G2. Das Erweiterungskameramodul 131 umfasst zwei Kameraelemente 140, wobei das erste Kameraelement zur ersten Kameragruppe und das zweite Kameraelement 140 zur zweiten Kameragruppe gehört.

Figur 12 zeigt einen Querschnitt durch z. B. das Gehäuse 17 des Hauptkameramoduls 130 im Bereich eines Kameraelementes 140. Das Gehäuse 17 umfasst ein sich über die Länge des Hauptkameramoduls 130 erstreckendes Gehäuseprofil 170, dessen Außenkontur die Form eines an einer Seite hin offenen Zylindermantels aufweist. In seiner Hälfte gegenüber der offenen Seite weist das Gehäuseprofil 170 Zwischenwände 171a, 171b und 171c auf, die eine sich über die Länge des Hauptkameramoduls 130 erstreckende in etwa quadratische Öffnung 172 bilden. Das Gehäuseprofil 170 ist mit einer sich über die Länge des Hauptkameramoduls 130 erstreckenden Mittelwand 173 versehen. Die Kameraelemente 140 sind an der Mittelwand 173 befestigt. In diesem Beispiel ist die Mittelwand 173 unterbrochen. Der dadurch entstandene Hohlraum wird als Kabelkanal genutzt.

Das Gehäuse 17 des Hauptkameramoduls 130 umfasst mehrere, die offene Seite verschließende Deckel 174a, 174b, 174c, 174d. Auf dem in der Figur linken Deckel 174 ist die Steuer- und Auswerteeinheit 200 angebracht. Die Steuer- und Auswerteeinheit 20 ist durch einfaches Lösen des Deckels 174 zugänglich.

Figur 11 zeigt für das Gehäuse 17 des Hauptkameramoduls 130, z. B. für eine Anwendung ohne Erweiterungskameramodule, zwei Enddeckel 176a, 176b für die beiden Enden des Gehäuseprofils 170.

An den Stellen, an denen die Deckel 174a bis 174d aneinander stoßen, sind Dichtungen 175 vorgesehen. Es sind weitere Dichtungen 177 zwischen dem Gehäuseprofil 170 und den Enddeckeln 176a, 176b vorgesehen. Die Dichtungen 175, 177 sind scheibenförmig ausgebildet. Zwischen dem Gehäuseprofil 170 und den Deckeln 174 bis 174d sind sich längs erstreckende Dichtstränge 178 vorgesehen.

Das Gehäuseprofil 170 ist mit mehreren Längsnuten 179 versehen. Mehrere Halter 180 der Überwachungsvorrichtung 8 sind mit Abstand in Längsrichtung zueinander, jeweils in zwei der Längsnuten 179 befestigt. Die Längsnuten 179 sowie nicht zu sehende Langlöcher in den Haltern 180 sind so angeordnet, dass die Überwachungsvorrichtung 8 in verschiedenen Neigungswinkeln zur Warenbahn 5 positionierbar ist.

Das Erweiterungskameramodul 131 ist wie das Hauptkameramodul 130 im Bereich der Kameraelemente 140 aufgebaut. Sein Gehäuse 17 umfasst ein Gehäuseprofil 170 und einen Deckel 174e. Die Gehäuse 17 der beiden Kameramodule 130 und 131, und zwar ihre Gehäuseprofile 170, sind miteinander verbunden. Die Enden der Gehäuseprofile 170, an denen die Kameramodule 130, 131 aneinanderstoßen, sind offen, d. h. ohne Enddeckel 176. Ein sich längs erstreckendes Profil 190, z. B. aus Stahl ist in den Öffnungen 172 der Gehäuseprofile 170 der beiden Kameramodule 130, 131 angeordnet. Das Profil 190 stabilisiert die Verbindung der beiden Kameramodule 130, 131. Seine Länge entspricht mindestens einem Kameraabstand Ka. In diesem Beispiel entspricht die Länge des Profils 190 in etwa dem doppelten Kameraabstand Ka.

In diesem Beispiel ist die Überwachungsvorrichtung ohne Beleuchtungseinrichtung ausgeführt. Die lichtdurchlässigen Bereiche des Gehäuses 17 sind durch durchsichtige Fenster 150 in den Deckeln 174 gebildet. Durch die Fenster 150 nehmen die Flächenkameraelemente 15 die Bilder der Warenbahn auf.

In einer Alternative einer Überwachungseinheit mit Beleuchtung sind z. B. sich über die gesamte Länge erstreckende Fenster in den Deckeln 174 vorgesehen.

In einer Alternative umfasst die Überwachungsvorrichtung ein größeres Erweiterungsmodul, das vier Kameraelemente aufweist, von denen das erste und dritte zu der ersten Kameragruppe und das zweite und vierte zur zweiten Kameragruppe gehören.

In weiteren Alternativen umfasst die Überwachungsvorrichtung mehrere gleich oder unterschiedlich große Erweiterungsmodule.

### Bezugszeichenliste

- 1: Maschinengestell
- 2: Legeschiene
- 3: Kettfaden
- 4: Nadelbarre
- 5: Warenbahn
- 6: Walze
- 7: Walze
- 8: Vorrichtung
- 9: Befestigungsvorrichtung
- 10: Lichtstrahl
- 11: Kettbaum
- 13: Kameramodul (Hauptkameramodul)
- 14: Kameraelement
- 15: Flächenkameraelement 15a Flächensensor
- 16: Optikelement
- 17: Gehäuse
- 18: Beleuchtungselement
- 19: LED
- 20: Steuer- und Auswerteeinheit
- 21: Kommunikationsverbindung
- 22: Kommunikationsverbindung
- 24: Kameradatenverbindung
- 26: Multiplexer
- 27: Verbindung
- 28: Verbindung
- 29: Mikro-Prozessor
- 30: Steuerelement
- 31: Steuerelement
- 32: Ausgang
- 33: Ausgang
- 34: erster Repeater
- 35: zweiter Repeater
- 36: Steuerleitung
- 37: Stromzufuhrverbindung
- 38: erster Repeater
- 39: zweiter abschaltbarer Repeater
- 40: Steuerleitung
- 41: Stromzufuhrverbindung
- 42: Versorgungselement
- 43: Versorgungselement
- 44: Ausgang
- 45: Ausgang
- 46: abschaltbarer Repeater
- 47: Leitung
- 48: Stromzufuhrverbindung
- 49: abschaltbarer Repeater
- 50: Leitung
- 51: Stromzufuhrverbindung
- 52: Eingang
- 53: Ausgang
- 54: Adressierschalter
- 55: IO-Expander
- 56: Repeater
- 57: aktivierbarer Repeater
- 58: Leitung
- 59: Serializer
- 62: Leitung
- 63: Repeater
- 64: Leitung
- 65: Leitung
- 66: Spannungsregeleinheit
- 67: rote LED
- 68: Leitung
- 69: Eingang
- 70: Ausgang
- 71: Adressierschalter
- 72: IO-Expander
- 73: Repeater
- 74: Treiber
- 75: Leitung
- 76: Spannungsregeleinheit
- 130: Hauptkameramodul
- 131: Erweiterungskameramodul
- 140: Kameraelement
- 150: Fenster
- 170: Gehäuseprofil
- 171a, b, c: Zwischenwände
- 172: Öffnung
- 173: Mittelwand
- 174a - e: Deckel
- 175: Dichtung
- 176a, b: Enddeckel
- 177: Dichtung
- 178: Dichtstrang
- 179: Nut
- 180: Halter

- T: Transportrichtung
- A: Abstand
- B: Breite des Kameramoduls
- D: Durchmesser des Gehäuses
- I: Breite des erfassten Bereichs
- X: Breite der Warenbahn
- G1: Kameragruppe
- G2: Kameragruppe
- BI: Rohdaten eines Bildes
- B1: bearbeitete Daten
- B2: normierte Daten

## Patentansprüche

1. Überwachungsvorrichtung (8) zur Überwachung einer laufenden Warenbahn (5), insbesondere auf Fehler, anhand ausgewerteter Bilddaten der Warenbahn (5),
mit mindestens zwei Kameraelementen (14, 140), die senkrecht zur Transportrichtung (T) der Warenbahn (5) nebeneinander positioniert sind,
mit einer Steuer- und Auswerteeinheit (20, 200) und mit mindestens einer seriellen Kommunikationsverbindung (21, 22), die mindestens ein Kameraelement (14, 140) und die Steuer- und Auswerteeinheit (20, 200) verbindet, wobei jedes Kameraelement (8) ein Flächenkameraelement (15) zur Aufnahme von Rohdaten aufweist, mit mindestens ein Kameramodul (13, 130, 131), das mindestens eine Kameragruppe (G1, G2) mit mindestens zwei Kameraelementen (14, 140) und einem Gehäuse (17) umfasst,
wobei die Kameraelemente (14,140) einer Kameragruppe (G1, G2) an eine serielle Kommunikationsverbindung (21, 22) angeschlossen sind,
wobei in jeder Kameragruppe (G1, G2) die Kameraelemente (14, 140) zur Übertragung der durch die Flächenkameraelemente (15) aufgenommenen Rohdaten über die serielle Kommunikationsverbindung (21, 22) zu der Steuer- und Auswerteeinheit (20) ausgebildet sind; wobei die Steuer- und Auswerteeinheit (20) zur Erzeugung von Bilddaten aus den Rohdaten und zur Auswertung der Bilddaten der Kameraelemente (14, 140) der Kameragruppen (G1, G2) ausgebildet ist,
wobei ein als Hauptkameramodul ausgebildetes Kameramodul (13, 130) die Steuer- und Auswerteeinheit (20, 200) umfasst, wobei
mindestens eines der Kameraelemente (14. 140) einer Kameragruppe (G1, G2) zwei Datenverbindungen und einen Multiplexer (26) aufweist,
wobei jeweils eine Datenverbindung als eine Kameradatenverbindung (24) ausgebildet ist, die zu dem Flächenkameraelement (15) des Kameraelementes (14, 140) geführt ist, und die andere Datenverbindung als eine Durchgangsdatenverbindung ausgebildet ist, die durch das Kameraelement (14, 140) geführt ist, und die an eine Datenverbindung eines weiteren Kameraelementes (14, 140) der Kameragruppe (G1, G2) anschließbar ist, und wobei mit Hilfe des Multiplexers (26) die beiden Datenverbindungen des Kameraelementes (14, 140) nacheinander an die serielle Kommunikationsverbindung (21, 22) anschließbar sind.

2. Überwachungsvorrichtung (8) nach Anspruch 1, **dadurch gekennzeichnet, dass** ein Kameramodul (13, 130, 131) mindestens zwei Kameragruppen (G1, G2) umfasst und dass die Steuer- und Auswerteeinheit (20, 200) zur parallelen Bearbeitung der Rohdaten der Kameragruppen (G1, G2) ausgebildet ist.

3. Überwachungsvorrichtung (8) nach Anspruch 2, **dadurch gekennzeichnet, dass** die Kameraelemente (14, 140) der Kameragruppen (G1, G2) abwechselnd in dem Gehäuse (17) nebeneinander positioniert sind.

4. Überwachungsvorrichtung (8) nach einem der Ansprüche 1 bis 3, **dadurch gekennzeichnet, dass** mindestens zwei Kameramodule (130, 131) vorgesehen sind, wobei die Gehäuse (17) der Kameramodule (130, 131) miteinander verbunden sind.

5. Überwachungsvorrichtung (8) nach einem der Ansprüche 1 bis 4, **dadurch gekennzeichnet, dass** das Flächenkameraelement (15) einen Flächensensor und ein Optikelement (16) aufweist.

6. Überwachungsvorrichtung (8) nach einem der Ansprüche 1 bis 5, **dadurch gekennzeichnet, dass** die Flächenkameraelemente (15) jeweils in einem Kameraabstand (Ka) zueinander angeordnet sind, wobei ein Kameraabstand (Ka) 0,3 m bis 2,0 m, vorzugsweise von 0,5 m bis 0,8 m beträgt.

7. Überwachungsvorrichtung (8) nach einem der Ansprüche 1 bis 6, **gekennzeichnet durch** eine Beleuchtungseinrichtung, die für jedes Kameraelement (14, 140) mindestens ein Beleuchtungselement (19) mit LEDs (18) aufweist, die auf einer Verbindungslinie der Flächenkameraelemente (15) angeordnet sind.

8. Verfahren zur Überwachung einer laufenden Warenbahn (5), insbesondere auf Fehler, die in eine Transportrichtung (T) transportiert wird,
indem Bilddaten der Warenbahn (5) ausgewertet werden,
wobei die Bilddaten mit Hilfe von mindestens zwei senkrecht zur Transportrichtung (T) der Warenbahn (5) nebeneinander positionierten Kameraelementen (14, 140),
einer Steuer- und Auswerteeinheit (20, 200) und
mindestens einer serielle Kommunikationsverbindung (21, 22), die mindestens ein Kameraelement (14, 140) und die Steuer- und Auswerteeinheit (20, 200) verbindet, erzeugt und ausgewertet werden, und
wobei Rohdaten der Bilddaten durch ein Flächenkameraelement (15) des jeweiligen Kameraelementes (14, 140) aufgenommen werden,
wobei die Rohdaten durch mindestens ein Kameramodul (13, 130, 131) aufgenommen werden,
wobei das Kameramodul (13, 130, 131) mindestens eine Kameragruppe (G1, G2) mit mindestens zwei Kameraelementen (14. 140) und ein Gehäuse (17) umfasst, und die Kameraelemente (14, 140) einer Kameragruppe (G1, G2) an eine serielle Kommunikationsverbindung (21, 22) angeschlossen sind,
wobei in jeder Kameragruppe (G1, G2) durch die Kameraelemente (14, 140) die durch die Flächenkameraelemente (15) aufgenommenen Rohdaten über die serielle Kommunikationsverbindung (21, 22) zu der Steuer- und Auswerteeinheit (20, 200) übertragen werden, und dass durch die Steuer- und Auswerteeinheit (20, 200) aus den Rohdaten Bilddaten erzeugt und die Bilddaten der Kameraelemente (14, 140) der Kameragruppen (G1, G2) auswertet werden,
wobei ein als Hauptkameramodul ausgebildetes Kameramodul (13, 130) die Steuer- und Auswerteeinheit (20, 200) umfasst, wobei
über mindestens ein Kameraelement (14, 140) einer Kameragruppe (G1, G2), das mit zwei Datenverbindungen und mit einem Multiplexer (26) versehen ist, Rohdaten von den Flächenkameraelementen (15) mindestens zweier Kameraelemente (14, 140) der Kameragruppe (G1, G2) über zwei Datenverbindungen zu der seriellen Kommunikationsverbindung (21, 22) geleitet werden,
wobei über eine als Kameradatenverbindung (24) ausgebildete Datenverbindung Rohdaten von dem Flächenkameraelement (15) des Kameraelementes (14, 140) und über eine als Durchgangsdatenverbindung ausgebildete Datenverbindung Rohdaten eines Flächenelementes (15) mindestens eines weiteren Kameraelementes (14, 140) zu der seriellen Kommunikationsverbindung (21, 22) geleitet werden, indem mit Hilfe des Multiplexers (26) die beiden Datenverbindungen des Kameraelementes (14, 140) nacheinander an die serielle Kommunikationsverbindung (21, 22) angeschlossen werden,

9. Verfahren nach Anspruch 8, **dadurch gekennzeichnet, dass** die Rohdaten der Kameraelemente (14, 140) von mindestens zwei Kameragruppen (G1, G2) in der Auswerte- und Steuereinheit (20, 200) parallel bearbeitet werden.

## Claims

1. Monitoring device (8) for monitoring a moving material web (5), especially for defects, using analyzed image data of the material web (5),
having at least two camera elements (14, 140), which are positioned adjacent to one another perpendicular to the direction of transport (T) of the material web (5),
having a control and evaluating unit (20, 200) and having at least one serial communication link (21, 22), which connects at least one camera element (14, 140) and the control and evaluating unit (20, 200), wherein each camera element (8) comprises an area scan camera element (15) for recording raw data, at least one camera module (13, 130, 131), that comprises at least one camera group (G1, G2) having at least two camera elements (14, 140) and a housing (17),
wherein the camera elements (14, 140) of a camera group (G1, G2) are connected to a serial communication link (21, 22),
wherein in each camera group (G1, G2) the camera elements (14, 140) are designed for the transmission of the raw data captured by the area scan camera elements (15) over the serial communication link (21, 22) to the control and evaluating unit (20); wherein the control and evaluating unit (20) is designed to generate image data from the raw data and to analyze the image data from the camera elements (14, 140) of the camera groups (G1, G2),
wherein a camera module (13, 130) designed as a main camera module comprises the control and evaluating unit (20, 200), wherein
at least one of the camera elements (14, 140) of a camera group (G1, G2) comprises two data links and a multiplexer (26),
wherein in each case one data link is designed as a camera data link (24), which is led to the area scan camera element (15) of the camera element (14, 140) and the other data link is designed as a through data link which is passed through the camera element (14, 140) and which may be connected to a data link of a further camera element (14, 140) of the camera group (G1, G2) and wherein the two data links of the camera element (14, 140) may be connected successively via the multiplexer (26) to the serial communication link (21, 22).

2. Monitoring device (8) according to claim 1, **characterized in that** a camera module (13, 130, 131) comprises at least two camera groups (G1, G2) and that the control and evaluating unit (20, 200) is designed for parallel processing of the raw data from the camera groups (G1, G2).

3. Monitoring device (8) according to claim 2, **characterized in that** the camera elements (14, 140) of the camera groups (G1, G2) are positioned alternating adjacent to each other in the housing (17).

4. Monitoring device (8) according to one of the claims 1 to 3, **characterized in that** at least two camera modules (130, 131) are provided, wherein the housings (17) of the camera modules (130, 131) are connected together.

5. Monitoring device (8) according to one of the claims 1 to 4, **characterized in that** the area scan camera element (15) comprises an area sensor and an optical element (16).

6. Monitoring device (8) according to one of the claims 1 to 5, **characterized in that** the area scan camera elements (15) are each arranged at a camera interval (Ka) from one another, wherein a camera interval (Ka) is 0.3 m to 2.0 m, preferably from 0.5 m to 0.8 m.

7. Monitoring device (8) according to one of the claims 1 to 6, **characterized by** an illuminating device, which comprises at least one illuminating element (19) for each camera element (14, 140) having LEDs (18) which are arranged on a connection line of the area scan camera elements (15).

8. Method for monitoring a moving material web (5), especially for defects, wherein the material web is transported in a direction of transport (T),
in which image data of the material web (5) is analyzed,
wherein the image data is generated and analyzed with the aid of at least two camera elements (14, 140), which are positioned adjacent to one another and perpendicular to the direction of transport (T) of the material web (5), of a control and evaluating unit (20, 200) and
of at least one serial communication link (21, 22), that connects at least one camera element (14, 140) and the control and evaluating unit (20, 200), and wherein raw data for the image data is captured by an area scan camera element (15) of each camera element (14, 140),
wherein the raw data is captured by at least one camera module (13, 130, 131),
wherein the camera module (13, 130, 131) comprises at least one camera group (G1, G2) having at least two camera elements (14, 140) and a housing (17), and the camera elements (14, 140) of a camera group (G1, G2) are connected to a serial communication link (21, 22),
wherein in each camera group (G1, G2) the camera elements (14, 140) transmit the raw data captured by the area scan camera elements (15) over the serial communication link (21, 22) to the control and evaluating unit (20, 200), and in that image data is generated from the raw data by the control and evaluating unit (20, 200) and the image data from the camera elements (14, 140) of the camera groups (G1, G2) is analyzed
wherein a camera module (13, 130) designed as a main camera module comprises the control and evaluating unit (20, 200), wherein
via at least one camera element (14, 140) of a camera group (G1, G2), which is provided with two data links and with one multiplexer (26), raw data from the area scan camera elements (15) of at least two camera elements (14, 140) of the camera group (G1, G2) are transmitted over two data links to the serial communication link (21, 22),
wherein raw data from the area scan camera element (15) of the camera element (14, 140) is passed through a data link designed as a camera data link (24) and raw data from the area scan camera element (15) of at least one further camera element (14, 140) is passed through a data link designed as a through data link to the serial communication link (21, 22) by the two data links of the camera element (14, 140) being connected in sequence to the serial communication link (21, 22) through the multiplexer (26).

9. Method according to claim 8, **characterized in that** the raw data from the camera elements (14, 140) of at least two camera groups (G1, G2) is processed in parallel in the control and evaluating unit (20, 200).

## Revendications

1. Dispositif de surveillance (8) pour la surveillance d'une bande de marchandises (5) en mouvement, notamment concernant des défauts, à l'aide de données d'image évaluées de la bande de marchandises (5),
avec au moins deux éléments de caméra (14, 140), qui sont positionnés l'un à côté de l'autre perpendiculairement à la direction de transport (T) de la bande de marchandises (5),
avec une unité de commande et d'évaluation (20, 200) et avec au moins une liaison de communication (21, 22) qui relie au moins un élément de caméra (14, 140) et l'unité de commande et d'évaluation (20, 200), chaque élément de caméra (8) présentant un élément de caméra plat (15) pour l'enregistrement de données brutes,
avec au moins un module de caméra (13, 130, 131), qui comprend au moins un groupe de caméras (G1, G2) avec au moins deux éléments de caméra (14, 140) et un boîtier (17),
les éléments de caméra (14, 140) d'un groupe de caméras (G1, G2) étant raccordés à une liaison de communication sérielle (21, 22),
dans chaque groupe de caméras (G1, G2), les éléments de caméra (14, 140) étant conçus pour transmettre les données brutes enregistrées par les éléments de caméra plats (15) à l'unité de commande et d'évaluation (20) par l'intermédiaire de la liaison de communication sérielle (21, 22) ; l'unité de commande et d'évaluation (20) étant conçue pour générer des données d'image à partir des données brutes et pour évaluer les données d'image des éléments de caméra (14, 140) des groupes de caméras (G1, G2),
un module de caméra (13, 130) étant conçu comme module de caméra principal comprenant l'unité de commande et d'évaluation (20, 200),
au moins un des éléments de caméra (14, 140) d'un groupe de caméras (G1, G2) présentant deux liaisons de données et un multiplexeur (26),
une liaison de données étant respectivement conçue comme une liaison de données de caméra (24) qui est guidée vers l'élément de caméra plat (15) de l'élément de caméra (14, 140), et l'autre liaison de données étant conçue comme une liaison de données de passage qui est guidée à travers l'élément de caméra (14, 140), et qui peut être raccordée à une liaison de données d'un autre élément de caméra (14, 140) du groupe de caméras (G1, G2), et les deux liaisons de données de l'élément de caméra (14, 140) peuvant être raccordées l'une après l'autre à la liaison de communication sérielle (21, 22) à l'aide du multiplexeur (26).

2. Dispositif de surveillance (8) selon la revendication 1, **caractérisé en ce qu'**un module de caméra (13, 130, 131) comprend au moins deux groupes de caméras (G1, G2), et **en ce que** l'unité de commande et d'évaluation (20, 200) est conçue pour traiter en parallèle les données brutes des groupes de caméras (G1, G2).

3. Dispositif de surveillance (8) selon la revendication 2, **caractérisé en ce que** les éléments de caméra (14, 140) des groupes de caméras (G1, G2) sont positionnés alternativement côte à côte dans le boîtier (17).

4. Dispositif de surveillance (8) selon l'une des revendications 1 à 3, **caractérisé en ce qu'**il est prévu au moins deux modules de caméra (130, 131), les boîtiers (17) des modules de caméra (130, 131) étant reliés entre eux.

5. Dispositif de surveillance (8) selon l'une des revendications 1 à 4, **caractérisé en ce que** l'élément de caméra plat (15) présente un capteur plat et un élément optique (16).

6. Dispositif de surveillance (8) selon l'une des revendications 1 à 5, **caractérisé en ce que** les éléments de caméra de surface (15) sont disposés chacun à une distance de caméra (Ka) les uns des autres, une distance de caméra (Ka) étant de 0,3 m à 2,0 m, de préférence de 0,5 m à 0,8 m.

7. Dispositif de surveillance (8) selon l'une des revendications 1 à 6, **caractérisé par** un dispositif d'éclairage qui présente pour chaque élément de caméra (14, 140) au moins un élément d'éclairage (19) avec des LED (18) qui sont disposées sur une ligne de liaison des éléments de caméra plats (15).

8. Procédé de surveillance d'une bande de marchandises (5) en mouvement, en particulier concernant des défauts,
la bande de marchandises (5) étant transportée dans une direction de transport (T),
en évaluant des données d'image de la bande de marchandises (5),
les données d'image étant traitées à l'aide d'au moins deux éléments de caméra (14, 140) positionnés l'un à côté de l'autre perpendiculairement à la direction de transport (T) de la bande de marchandises (5),
une unité de commande et d'évaluation (20, 200) et
au moins une liaison de communication sérielle (21, 22), qui relie au moins un élément de caméra (14, 140) et l'unité de commande et d'évaluation (20, 200), sont générées et évaluées, et
les données brutes des données d'image étant enregistrées par un élément de caméra plat (15) de l'élément de caméra respectif (14, 140),
les données brutes étant enregistrées par au moins un module de caméra (13, 130, 131),
le module de caméra (13, 130, 131) comprenant au moins un groupe de caméras (G1, G2) avec au moins deux éléments de caméra (14, 140) et un boîtier (17), et les éléments de caméra (14, 140) d'un groupe de caméras (G1, G2) étant raccordés à une liaison de communication sérielle (21, 22), dans chaque groupe de caméras (G1, G2), les données brutes enregistrées par les éléments de caméra plats (15) étant transmises par les éléments de caméra (14, 140) à l'unité de commande et d'évaluation (20, 200) par l'intermédiaire de la liaison de communication sérielle (21, 22), et l'unité de commande et d'évaluation (20, 200) produisant des données d'image à partir des données brutes et évalue les données d'image des éléments de caméra (14, 140) des groupes de caméras (G1, G2),
un module de caméra (13, 130) conçu comme module de caméra principal comprenant l'unité de commande et d'évaluation (20, 200),
par l'intermédiaire d'au moins un élément de caméra (14, 140) d'un groupe de caméras (G1, G2), qui est pourvu de deux liaisons de données et d'un multiplexeur (26), des données brutes provenant des éléments de caméra de surface (15) d'au moins deux éléments de caméra (14, 140) du groupe de caméras (G1, G2) étant transmises par l'intermédiaire de deux liaisons de données à la liaison de communication sérielle (21, 22),
des données brutes de l'élément de caméra plat (15) de l'élément de caméra (14, 140) étant transmises par une liaison de données conçue comme une liaison de données de caméra (24) et des données brutes d'un élément plat (15) d'au moins un autre élément de caméra (14, 140) étant transmises par une liaison de données conçue comme une liaison de données de passage à la liaison de communication sérielle (21, 22) en raccordant successivement les deux liaisons de données de l'élément de caméra (14, 140) à la liaison de communication sérielle (21, 22) à l'aide du multiplexeur (26).

9. Procédé selon la revendication 8, **caractérisé en ce que** les données brutes des éléments de caméra (14, 140) d'au moins deux groupes de caméras (G1, G2) sont traitées en parallèle dans l'unité de command et d'évaluation (20, 200).
